# FASCICULE DE BREVET EUROPEEN

(11) **EP 2 947 348 B1**
(45) Date de publication et mention de la délivrance du brevet: **03.03.2021**
(21) Numéro de dépôt: 15167395.1
(22) Date de dépôt: 12.05.2015
(51) Int. Cl.: F16H 25/22, F16H 25/20, F16C 19/16, F16C 19/18

(54) **DISPOSITIF DE PRÉCHARGE POUR UN MÉCANISME DE VIS À ROULEAUX GUIDÉ EN ROTATION**
VORSPANNVORRICHTUNG FÜR EINEN DREHBAR GELAGERTEN GEWINDEROLLENMECHANISMUS
PRE-CHARGING DEVICE FOR A ROTATABLY GUIDED ROLLER SCREW MECHANISM

(30) Priorité: 16.05.2014 FR 1401107
(43) Date de publication de la demande: 25.11.2015
(73) Titulaire: THALES, 92400 Courbevoie (FR)
(72) Inventeur: Combernoux,Thomas, 06156 CANNES LA BOCCA CEDEX (FR); Blanc, Alain, 06156 CANNES LA BOCCA CEDEX (FR); Chassoulier, Damien, 06370 MOIRANS-SARTOUX (FR); Baudasse, Yannick, 06156 CANNES LA BOCCA CEDEX (FR)
(74) Mandataire: Marks & Clerk France

(56) Documents cités:
- EP-A1- 0 603 067
- DE-A1-102010 011 821
- DE-U1- 9 214 062
- US-A- 2 683 379
- US-A- 3 884 090

## Description

La présente invention concerne le domaine des mécanismes de vis à rouleaux satellites assurant la conversion d'un mouvement de rotation en mouvement de translation, et plus précisément un mécanisme de vis à rouleaux guidé en rotation par rapport à un bâti, et muni d'un dispositif de précharge capable de rattraper les jeux à l'intérieur du mécanisme. L'invention trouve une utilité particulière dans le domaine aérospatial notamment pour la réalisation d'actuateur linéaire.

On a recours aux actuateurs linéaires dans divers systèmes embarqués sur un satellite, comme par exemple pour l'orientation de dispositifs de propulsion dédiés au transfert d'orbite ou au maintien à poste d'un satellite en orbite. Dans ces systèmes, un moteur électrique transmet un mouvement de rotation à un mécanisme vis-écrou assurant la conversion du mouvement de rotation en mouvement de translation. Pour améliorer le rendement de la conversion ou lorsqu'une grande précision de mouvement est recherchée, des mécanismes de type vis à rouleaux peuvent être mis en œuvre. De nombreux actuateurs linéaires utilisent les mécanismes de vis à rouleaux satellites, en particulier pour leur longue durée de vie et leur compacité.

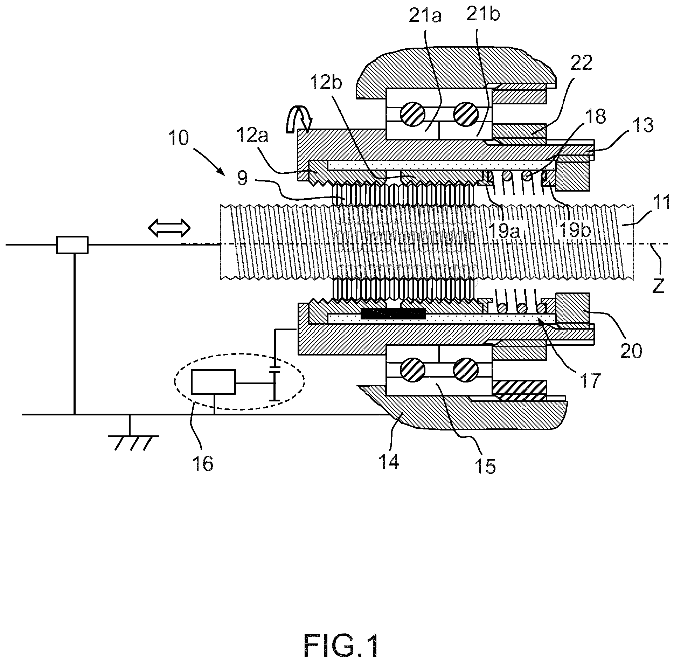

La figure 1 représente un actuateur linéaire comprenant un mécanisme de vis à rouleaux. De manière connue, le mécanisme de vis à rouleaux 10 comprend des rouleaux 9 intercalés entre une vis sans fin 11 et deux bagues taraudées 12a et 12b reliées à un boitier 13. Le boitier est guidé en rotation par rapport au bâti 14 au moyen d'un palier à roulement 15. Dans l'exemple représenté, le boitier est entrainé en rotation par un moteur rotatif 16. La vis sans fin 11 est liée au bâti en rotation et libre en translation. Le mouvement de rotation du boitier 13 permet d'entrainer en translation la vis sans fin 11 par rapport au bâti. Le principe des mécanismes de vis à rouleaux est connu et n'est pas repris ici, en particulier les moyens permettant de ramener à chaque tour de la vis sans fin, les rouleaux dans une position centrale par rapport aux deux bagues taraudées.

Il existe divers dispositifs de précharge pour les mécanismes de vis à rouleaux. Ces dispositifs qui imposent une précontrainte au mécanisme de manière à rattraper les jeux à l'intérieur du mécanisme sont couramment mis en œuvre dans le domaine aérospatial. Lorsque le mécanisme est appelé à subir des vibrations élevées et à fonctionner sous vide poussé, comme c'est notamment le cas lors d'un lancement de l'engin spatial, les déplacements axiaux relatifs répétés entre le boitier, les rouleaux et les bagues taraudés génèrent des chocs répétés qui peuvent endommager ou gripper les éléments du mécanisme. Dans une mise en œuvre connue, on impose une précharge axiale entre les deux bagues taraudées, de manière à maintenir les éléments mobiles en contact les uns des autres. On connait plusieurs mécanismes capables d'appliquer une précharge en compression entre les deux bagues taraudées.

On connait en particulier le dispositif de précharge décrit par la demande de brevet publiée sous la référence FR2699633 dont le principe est représenté sur la figure 1. Les deux bagues taraudées 12a et 12b sont montées dans le boitier 13 de sorte qu'une première bague taraudée, ici référencée 12a soit solidaire du boitier, et qu'une seconde bague taraudée, ici référencée 12b soit liée en rotation au boitier et libre en translation. Le dispositif de précharge est un mécanisme à ressort 17 comprenant un ressort hélicoïdal de compression 18 placé autour de la vis sans fin et entre deux bagues d'appui 19a et 19b. La bague d'appui 19a est en contact de la bague taraudée 12b. La bague d'appui 19b est en contact d'un écrou de précharge 20 monté sur le boitier permettant d'imposer un effort en compression au ressort hélicoïdal.

L'actuateur linéaire est constitué du mécanisme de vis à rouleaux 10 guidé en rotation par le palier à roulement 15. Le guidage en rotation est également exposé aux fortes vibrations et aux conditions de vide poussé. Pour cette raison, il comprend également un dispositif de précharge. Dans l'exemple représenté sur la figure 1, le palier à roulement est constitué de roulements à précharge solide de type super duplex. Le palier 15 comprend deux rangées de roulements à billes à contact oblique montées en X. Les bagues intérieures 21a et 21b des deux rangées de roulements sont mises en charge au moyen d'un écrou de précharge 22 monté sur le bâti.

Ainsi, l'actuateur linéaire comprend deux dispositifs de précharge, capables de précontraindre respectivement le mécanisme de vis à rouleaux et le guidage en rotation de celui-ci par rapport au bâti. Il en résulte un actuateur linéaire complexe, dont la précharge nécessite un grand nombre de composants (bagues d'appui, ressort hélicoïdal, écrous de précharge, roulements super duplex à précharge, etc...). L'ensemble de ces composants, essentiellement constitués d'acier inoxydable, représente une masse et un volume importants. L'actuateur linéaire est également complexe à concevoir et à fabriquer. Il reste donc désirable de disposer d'un actuateur linéaire intégrant un dispositif de précharge simple, peu coûteux, compatible des exigences les plus ambitieuses du domaine aérospatial.

A cet effet, l'invention a pour objet un actuateur linéaire comprenant un mécanisme de vis à rouleaux guidé en rotation par rapport à un bâti au moyen d'un premier et d'un second roulements à billes à contact oblique ; le mécanisme de vis à rouleaux comprenant des rouleaux intercalés entre une vis sans fin et une première et une seconde bagues taraudés liées entre elles en rotation et libre en translation. La première et la seconde bagues taraudées sont solidaires d'une bague intérieure respectivement du premier et du second roulements à billes à contact oblique. L'actuateur linéaire comprend un unique dispositif de précharge capable d'exercer une contrainte entre deux bagues extérieures respectivement du premier et du second roulements à billes à contact oblique, permettant de mettre en charge simultanément le mécanisme de vis à rouleaux et le guidage en rotation du mécanisme de vis-à rouleaux par rapport au bâti.

Avantageusement, les bagues taraudées constituent les bagues intérieures des deux roulements à billes.

Avantageusement, les bagues taraudées sont liées au moyen d'une clavette ou d'un soufflet métallique.

Avantageusement, l'actuateur linéraire comprend un dispositif de précharge solide capable d'exercer une contrainte entre les bagues extérieures mises en contact l'une de l'autre.

Avantageusement, le dispositif de précharge comprend une surface d'appui et une bague élastique enserrant les deux bagues extérieures en contact l'une de l'autre, et comprenant un ensemble de vis de bridage configuré pour imposer une contrainte sur la bague élastique.

Avantageusement, l'actuateur linéaire comprend un dispositif de précharge élastique capable d'exercer une contrainte entre les deux bagues extérieures distantes l'une de l'autre.

Avantageusement, le bâti comprend une première et une seconde demi-coquilles solidaires respectivement de la première et seconde bagues extérieures. Le dispositif de précharge est configuré pour imposer une contrainte tendant à rapprocher les deux bagues extérieures ; le guidage en rotation étant assuré par les deux roulements à billes montés en « X ».

Avantageusement, le bâti comprend une première et une seconde demi-coquilles solidaires respectivement de la première et seconde bagues extérieures. Le dispositif de précharge est configuré pour imposer une contrainte tendant à éloigner les deux bagues extérieures ; le guidage en rotation étant assuré par les deux roulements à billes montés en « O ».

Avantageusement, la vis sans fin et le bâti sont liés en rotation et libre en translation.

Avantageusement, la vis sans fin et le bâti sont liés au moyen d'une clavette ou d'un soufflet métallique.

Avantageusement, l'actuateur linéaire comprend un moteur rotatif capable d'entrainer en rotation les bagues taraudées du mécanisme de vis-à-rouleaux par rapport au bâti.

Avantageusement, les rouleaux comprennent des gorges circulaires en contact avec la vis sans fin et avec les bagues taraudées.

L'invention sera mieux comprise et d'autres avantages apparaîtront à la lecture de la description détaillée d'un mode de réalisation donné à titre d'exemple sur les figures suivantes.
La figure 1, déjà présentée, représente un actuateur linéaire comprenant un mécanisme de vis à rouleaux selon l'état connu de la technique,
les figures 2a et 2b représentent un premier exemple d'actuateur linéaire selon l'invention comprenant un mécanisme de vis à rouleaux guidé en rotation,
les figures 3a et 3b représentent un second exemple d'actuateur linéaire selon l'invention comprenant un mécanisme de vis à rouleaux guidé en rotation,
les figures 4a et 4b représentent un troisième exemple d'actuateur linéaire selon l'invention comprenant un mécanisme de vis à rouleaux guidé en rotation.

Par souci de clarté, les mêmes éléments porteront les mêmes repères dans les différentes figures.

L'invention porte en premier lieu sur un actuateur linéaire destiné à être embarqué sur un engin spatial, par exemple pour l'orientation de la poussée de propulseurs par rapport à la structure du satellite ou encore pour l'orientation de réflecteurs utilisés pour les télécommunications spatiales. Il est envisagé un actuateur linéaire comprenant un moteur rotatif électrique et un mécanisme de vis à rouleaux assurant la conversion en mouvement de translation. L'actionneur linéaire comprend un mécanisme de vis à rouleaux et un guidage en rotation coaxiaux. Les figures représentent une configuration particulière de l'actionneur linéaire, dite à « vis translatante », dans laquelle le moteur entraine le boitier extérieur du mécanisme de vis à rouleaux en rotation par rapport à un bâti, entrainant à son tour la vis sans fin en translation par rapport au bâti. Dans une configuration alternative, dite à « écrou translatant », le moteur entraine la vis sans fin du mécanisme de vis à rouleaux en rotation par rapport au bâti, entrainant en translation le boitier extérieur du mécanisme de vis à rouleaux par rapport au bâti. L'invention n'est pas limitée à l'application particulière d'un actuateur linéaire, en configuration vis translatante, embarqué sur un satellite, mais couvre plus largement un mécanisme de vis à rouleaux d'axe Z, guidé en rotation par rapport à un bâti autour du même axe Z.

Il existe deux grandes familles de vis à rouleaux. Dans une première famille, la vis sans fin, les rouleaux et l'écrou sont tous trois filetés ou taraudés au même pas. Ainsi lors de la rotation relative de l'écrou par rapport à la vis, il n'y a pas de déplacement axial des rouleaux. Cette première famille est peu précise et le risque d'hyperstaticité entre les rouleaux d'une part et l'écrou et la vis d'autre part est important. Dans une seconde famille, la vis et l'écrou restent fileté pour la première et taraudé pour le second. Les rouleaux possèdent des gorges circulaires. Lors du fonctionnement, les rouleaux se déplacent axialement et un mécanisme de recirculation est prévu. Plus précisément, la recirculation peut être prévue lors de chaque tour complet des rouleaux dans une rainure longitudinale réalisée dans l'écrou. Des cames fixées aux extrémités de l'écrou permettent de dégager le rouleau de la vis et l'insérer dans la rainure de l'écrou pour le déplacer axialement. Cette seconde famille apporte plus de précision dans le déplacement linéaire de la vis par rapport à la première famille. Le contact des gorges des rouleaux sur la vis et sur l'écrou présente moins de risque d'hyperstaticité que pour la première famille.

L'invention porte sur un dispositif de précharge pour un tel mécanisme de vis à rouleaux guidé en rotation. L'idée générale de la présente invention est d'assurer une précharge simultanée de la vis à rouleaux et du palier de guidage en rotation de la vis à rouleaux. L'invention est particulièrement adaptée à la seconde famille de vis à rouleaux. En effet, les jeux mis en œuvre dans la première famille au niveau des contacts entre les rouleaux, la vis et l'écrou sont généralement plus importants que ceux de la seconde famille. Une précharge commune du palier et des filetages entraine un rattrapage de jeu qui risque d'être incompatible dans la première famille. Par contre dans la seconde famille les jeux mis en œuvre dans le palier et dans la vis à rouleau sont du même ordre de grandeur. Pour la seconde famille, une précharge commune permet donc facilement de rattraper les jeux à la fois dans le palier et dans la vis à rouleau.

Trois modes de réalisation possibles de dispositif de précharge sont décrits dans la suite. La précharge simultanée de la vis à rouleaux et de son guidage en rotation simplifie de manière significative les systèmes connus de l'art antérieur.

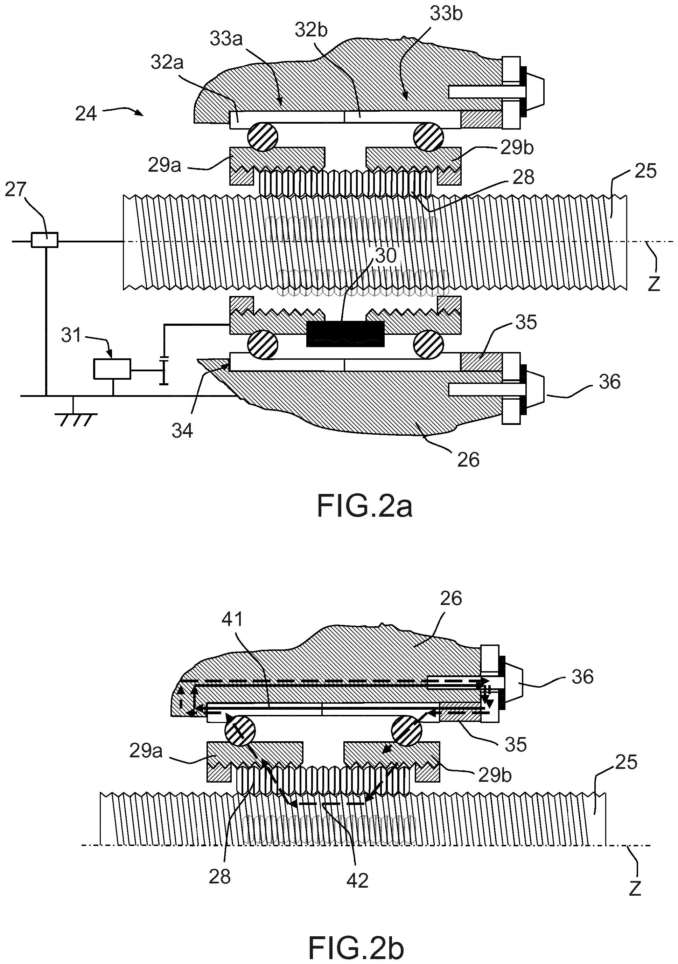

Les **figures 2a et 2b** représentent un premier exemple d'actuateur linéaire selon l'invention comprenant un mécanisme de vis à rouleaux d'axe Z, guidé en rotation par rapport à un bâti autour du même axe Z. Le mécanisme de vis à rouleaux 24 comprend une vis sans fin 25 d'axe Z, liée au bâti 26 en rotation et libre en translation. Il est envisagé de réaliser cette liaison glissière 27, entre la vis sans fin 25 et le bâti 26, au moyen d'une clavette ou d'un soufflet métallique. Le mécanisme de vis à rouleaux 24 comprend également des rouleaux 28 intercalés entre la vis sans fin 25 et deux bagues taraudées 29a et 29b. Le principe de fonctionnement de la vis à rouleaux ainsi constituée est analogue à celui de l'art antérieur déjà introduit. Typiquement, la surface extérieure des rouleaux satellites 28 est pourvue de gorges espacées selon un pas égal au pas des filets de la vis sans fin 25 et des deux bagues taraudées 29a et 29b. Les gorges ont des sections circulaires autour de l'axe principal de chaque rouleau qui est parallèle à l'axe Z de la vis sans fin 25. Les gorges sont en contact avec les filets de la vis sans fin 25 et avec les filets des bagues taraudées 29a et 29b.

Les rouleaux sont répartis angulairement autour de la vis sans fin. Une cage séparatrice (non représentée) est généralement mise en œuvre pour maintenir l'écartement angulaire des rouleaux. La vis sans fin comprend aussi des moyens pour ramener à chaque tour de la vis sans fin, les rouleaux dans une position centrale axialement symétrique par rapport aux deux bagues taraudées. Ces moyens, non représentés sur les figures, sont habituellement constituées par un évidement formé à l'intérieur des deux bagues taraudées, sur une longueur excédant la longueur d'un rouleau, et par des surfaces de came formées sur les bagues taraudées à proximité de la région angulaire correspondant à cet évidement.

Les deux bagues taraudées 29a et 29b sont liées entre elles en rotation et libre en translation, par l'intermédiaire des moyens de liaison 30, préférentiellement constitués d'une clavette ou d'un soufflet métallique. La vis à rouleaux ainsi définie permet de convertir un mouvement de rotation généré par un moteur rotatif 31 et transmis aux bagues taraudées, en un mouvement de translation de la vis sans fin 25.

Le guidage en rotation du mécanisme de vis à rouleaux par rapport au bâti, autour de l'axe Z, est réalisé au moyen de deux rangées de roulements à billes à contact oblique montées en « X ». Un premier roulement à billes 33a comprend une bague extérieure 32a et une bague intérieure solidaire de la bague taraudée 29a. De même, un second roulement à billes 33b comprend une bague extérieure 32b solidaire du bâti et une bague intérieure solidaire de la bague taraudée 29b. Dans l'exemple représenté sur les figures, les bagues taraudées 29a et 29b du mécanisme de vis à rouleaux constituent les bagues intérieures des roulements à billes 33a et 33b. Pour cela, chacune des bagues taraudées, respectivement 29a et 29b, comprennent une gorge aménagée dans la surface extérieure de la bague taraudée, assurant le guidage des billes des roulements à billes, respectivement 33a et 33b. Notons qu'il est bien sûr également envisagé l'alternative selon laquelle le taraudage de la vis à rouleaux n'est pas directement usiné dans les bagues des roulements, mais réalisé dans des pièces intermédiaires solidaires des bagues des roulements.

Les bagues extérieures 32a et 32b des deux roulements à billes 33a et 33b sont montés dans un alésage du bâti. La bague extérieure 33a est en butée le long d'un premier flan avec une surface d'appui 34 du bâti, et le long d'un second flan avec la bague extérieure 33b. La bague extérieure 33b est en contact le long d'un premier flan avec la bague extérieure 33a et le long d'un second flan avec une bague élastique 35. Un ensemble de vis de bridage 36 est monté sur le bâti de manière à comprimer la bague élastique 35.

La butée mécanique 34 et la bague élastique 35, enserrant les deux bagues extérieures 32a et 32b, forment avec l'ensemble de vis de bridage 36 configuré pour imposer une contrainte sur la bague élastique, le dispositif de précharge de l'actuateur linéaire. Ce dispositif de précharge est particulièrement avantageux car il permet de mettre en charge simultanément le mécanisme de vis à rouleaux et le guidage en rotation du mécanisme de vis-à rouleaux par rapport au bâti. La figure 2b illustre les deux chemins d'efforts exercés simultanément par le dispositif de précharge : un premier chemin d'effort 41 entre le bâti et les bagues extérieures des roulements à bille ; et un second chemin d'effort 42 entre le bâti et la vis sans fin, passant par les billes, les contacts obliques des roulements, les bagues taraudées et les rouleaux. Le rattrapage de jeu est dans un premier temps effectué entre les bagues intérieures du roulement et les rouleaux puis dans un dans un deuxième temps entre les bagues extérieures du roulement. La maitrise de la contrainte interne dans le roulement double et dans la vis à rouleaux est ainsi garantie par rattrapage de jeu. La contrainte résiduelle due au serrage des vis de bridage passe alors soit par la bague élastique, soit par les bagues extérieures des roulements.

L'actuateur linéaire simplifie la combinaison entre la vis à rouleaux et son guidage en rotation. Le nombre de composants est fortement réduit. Les chaines de côtes sont simplifiées. La performance de l'actuateur est améliorée, en particulier les performances de pointage. L'actuateur linéaire intègre un dispositif de précharge unique, capable de rattraper les jeux des deux mécanismes. Le procédé de fabrication et de mise en précharge de l'actuateur est plus simple et moins coûteux.

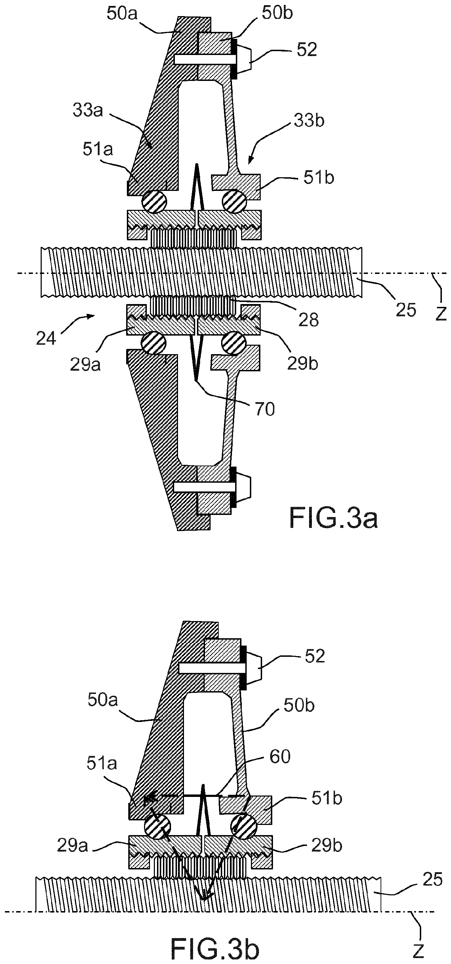

Les **figures 3a et 3b** représentent un second exemple d'actuateur linéaire selon l'invention comprenant un mécanisme de vis à rouleaux guidé en rotation par rapport à un bâti. Ce second exemple d'actuateur linéaire comprend des composants identiques au premier exemple décrit par les figures 2a et 2b. Les composants communs portent les mêmes repères sur les figures 3a et 3b. Ce second exemple comprend aussi des composants différents que nous allons décrire.

Le mécanisme de vis à rouleaux 24 comprend une vis sans fin 25 et des rouleaux 28 intercalés entre la vis sans fin 25 et deux bagues taraudées 29a et 29b. Les deux bagues taraudées 29a et 29b sont liées entre elles en rotation et libre en translation, par l'intermédiaire des moyens de liaison 70 constitués d'un soufflet métallique, de pions ou de clavettes. La vis à rouleaux ainsi définie permet de convertir un mouvement de rotation transmis aux bagues taraudées en un mouvement de translation de la vis sans fin 25. Comme précédemment, le guidage en rotation du mécanisme de vis à rouleaux par rapport au bâti est réalisé au moyen de deux rangées de roulements à billes à contact oblique 33a et 33b montées en « X ». Les bagues taraudées 29a et 29b du mécanisme de vis à rouleaux 24 constituent les bagues intérieures des roulements à billes.

Contrairement au premier exemple d'actuateur linéaire, les deux roulements à billes ne sont pas montés en contact l'un de l'autre, dans un alésage du bâti. Dans ce second exemple, le bâti comprend deux demi-coquilles 50a et 50b reliées par un ensemble de vis de bridage 52. La bague extérieure 51a du roulement à billes 33a est solidaire de la première demi-coquille 50a du bâti. La bague extérieure 51b du roulement à billes 33b est solidaire de la seconde demi-coquille 50b du bâti. Comme représenté sur les figures 3a et 3b, la bague extérieure et la demi-coquille peuvent être constituées d'un unique composant monobloc, permettant de réduire le nombre de composants de l'actuateur et simplifier son procédé de fabrication. Les bagues extérieures 51a et 51b des deux roulements à billes ne sont pas en contact l'une de l'autre. Dans cet exemple d'un montage en « X » des roulements à billes, l'ensemble de vis de bridage 52 est configuré de manière à exercer un effort tendant à rapprocher les deux bagues extérieures 51a et 51b formant le dispositif de précharge de l'actuateur linéaire. Comme dans le premier exemple, cet unique dispositif de précharge permet avantageusement de mettre en charge simultanément le mécanisme de vis à rouleaux et le guidage en rotation du mécanisme de vis-à rouleaux par rapport au bâti. Dans ce second exemple, les deux bagues extérieures ne sont pas en contact l'une de l'autre, la précharge est élastique. Comme illustré par la figure 3b, le dispositif de précharge permet le rattrapage des jeux au moyen d'un unique chemin d'effort 60 entre les demi-coquilles du bâti et la vis sans fin, passant par les billes, les contacts obliques des roulements, les bagues taraudées et les rouleaux. Ce dispositif de précharge élastique permet avantageusement de limiter le risque de grippage par frottement des pièces en contact.

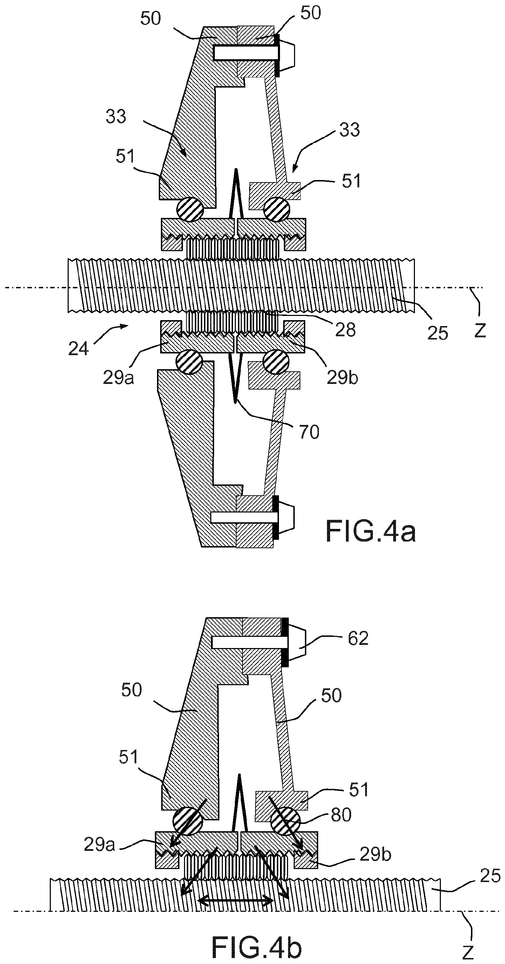

Les **figures 4a et 4b** représentent un troisième exemple d'actuateur linéaire selon l'invention comprenant un mécanisme de vis à rouleaux guidé en rotation par rapport à un bâti. Ce troisième exemple d'actuateur linéaire est similaire au second exemple décrit par les figures 2a et 2b. Les composants communs portent les mêmes repères et ne sont pas détaillés. Dans ce troisième exemple, le guidage en rotation est assuré au moyen de deux rangées de roulements à billes à contacts oblique 33c et 33d montées en « O ». Les bagues taraudées 29a et 29b du mécanisme de vis à rouleaux 24 constituent les bagues intérieures des roulements à billes.

Dans ce troisième exemple, le bâti comprend deux demi-coquilles 50c et 50d reliées par un ensemble de vis de bridage 62. La bague extérieure 51c du roulement à billes 33c est solidaire de la première demi-coquille 50c du bâti. La bague extérieure 51d du roulement à billes 33d est solidaire de la seconde demi-coquille 50d du bâti. Les bagues extérieures 51c et 51d des deux roulements à billes ne sont pas en contact l'une de l'autre. L'ensemble de vis de bridage 62 est configuré de manière à exercer un effort tendant à éloigner les deux bagues extérieures 51c et 51d. Comme précédemment, cet unique dispositif de précharge permet avantageusement de mettre en charge simultanément le mécanisme de vis à rouleaux et le guidage en rotation du mécanisme de vis-à rouleaux par rapport au bâti. Les deux bagues extérieures ne sont pas en contact l'une de l'autre, la précharge est élastique. Comme illustré par la figure 4b, le dispositif de précharge permet le rattrapage des jeux au moyen d'un unique chemin d'effort 70 entre les demi-coquilles du bâti et la vis sans fin, passant par les billes, les contacts obliques des roulements, les bagues taraudées et les rouleaux. Ce dispositif de précharge élastique permet avantageusement de limiter le risque de grippage par frottement des pièces en contact.

## Revendications

1. Actuateur linéaire comprenant un mécanisme de vis à rouleaux (24) guidé en rotation par rapport à un bâti (26) au moyen d'un premier et d'un second roulements à billes à contact oblique (33a, 33b); le mécanisme de vis à rouleaux (24) comprenant des rouleaux (28) intercalés entre une vis sans fin (25) et une première et une seconde bagues taraudés (29a, 29b) liées entre elles en rotation et libre en translation, **caractérisé en ce que** la première et la seconde bagues taraudées (29a, 29b) sont solidaires d'une bague intérieure respectivement du premier et du second roulements à billes à contact oblique (33a, 33b),
et **en ce que** l'actuateur linéaire comprend un unique dispositif de précharge (36, 52) capable d'exercer une contrainte entre deux bagues extérieures (32a, 32b) respectivement du premier et du second roulements à billes à contact oblique (33a, 33b), permettant de mettre en charge simultanément le mécanisme de vis à rouleaux (24) et le guidage en rotation du mécanisme de vis-à rouleaux (24) par rapport au bâti (26).

2. Actuateur linéaire selon la revendication 1, dans lequel les bagues taraudées (29a, 29b) constituent les bagues intérieures des deux roulements à billes (33a, 33b).

3. Actuateur linéaire selon la revendication 2, dans lequel les bagues taraudées (29a, 29b) sont liées au moyen d'une clavette (30).

4. Actuateur linéaire selon la revendication 2, dans lequel les bagues taraudées (29a, 29b) sont liées au moyen d'un soufflet métallique (70).

5. Actuateur linéaire selon la revendication 1 à 4, comprenant un dispositif de précharge solide (36) capable d'exercer une contrainte entre les bagues extérieures (32a, 32b) mises en contact l'une de l'autre.

6. Actuateur linéaire selon la revendication 5, dont le dispositif de précharge (36) comprend une surface d'appui (34) et une bague élastique (35) enserrant les deux bagues extérieures (32a, 32b) en contact l'une de l'autre, et comprenant un ensemble de vis de bridage (36) configuré pour imposer une contrainte sur la bague élastique (35).

7. Actuateur linéaire selon la revendication 1 à 4, comprenant un dispositif de précharge élastique (52) capable d'exercer une contrainte entre les deux bagues extérieures (51a, 51b) distantes l'une de l'autre.

8. Actuateur linéaire selon la revendication 7, dont le bâti comprend une première et une seconde demi-coquilles (50a, 50b) solidaires respectivement de la première et seconde bagues extérieures (51a, 51b), et dont le dispositif de précharge (52) est configuré pour imposer une contrainte tendant à rapprocher les deux bagues extérieures (51a, 51b) ; le guidage en rotation étant assuré par les deux roulements à billes (33a, 33b) montés en « X ».

9. Actuateur linéaire selon la revendication 7, dont le bâti comprend une première et une seconde demi-coquilles (50c, 50d) solidaires respectivement de la première et seconde bagues extérieures (51c, 51d), et dont le dispositif de précharge (62) est configuré pour imposer une contrainte tendant à éloigner les deux bagues extérieures (51c, 51d) ; le guidage en rotation étant assuré par les deux roulements à billes (33c, 33d) montés en « O ».

10. Actuateur linéaire selon l'une des revendications précédentes, dans lequel la vis sans fin (25) et le bâti (26) sont liés en rotation et libre en translation.

11. Actuateur linéaire selon la revendication 10, dans lequel la vis sans fin (25) et le bâti (26) sont liés au moyen d'une clavette ou d'un soufflet métallique (27).

12. Actuateur linéaire selon l'une des revendications précédentes, comprenant un moteur rotatif (31) capable d'entrainer en rotation les bagues taraudées (29a, 29b) du mécanisme de vis-à-rouleaux (24) par rapport au bâti (26).

13. Actuateur linéaire selon l'une des revendications précédentes, dans lequel les rouleaux (28) comprennent des gorges circulaires en contact avec la vis sans fin (25) et avec les bagues taraudées (29a, 29b).

## Patentansprüche

1. Linearstellglied, umfassend einen Gewinderollenmechanismus (24), welcher in Bezug auf ein Gestell (26) mithilfe eines ersten und eines zweiten Schrägkugellagers (33a, 33b) drehbar geführt ist; wobei der Gewinderollenmechanismus (24) Rollen (28) umfasst, welche zwischen einer Schnecke (25) und einem ersten und einem zweiten Ring mit Innengewinde (29a, 29b) zwischengeschaltet sind, welche drehbar miteinander verbunden und in Translationsrichtung frei beweglich sind,
**dadurch gekennzeichnet, dass** der erste und der zweite Ring mit Innengewinde (29a, 29b) fest mit einem inneren Ring jeweils des ersten und des zweiten Schrägkugellagers (33a, 33b) verbunden sind,
und dadurch, dass das Linearstellglied eine einzige Vorspannvorrichtung (36, 52) umfasst, welche in der Lage ist, eine Spannung zwischen zwei äußeren Ringen (32a, 32b) jeweils des ersten und des zweiten Schrägkugellagers (33a, 33b) auszuüben, wodurch es ermöglicht wird, gleichzeitig den Gewinderollenmechanismus (24) und die drehbare Führung des Gewinderollenmechanismus (24) in Bezug auf das Gestell (26) zu belasten.

2. Linearstellglied nach Anspruch 1, wobei die Ringe mit Innengewinde (29a, 29b) die inneren Ringe der beiden Kugellager (33a, 33b) bilden.

3. Linearstellglied nach Anspruch 2, wobei die Ringe mit Innengewinde (29a, 29b) mithilfe einer Passfeder (30) verbunden sind.

4. Linearstellglied nach Anspruch 2, wobei die Ringe mit Innengewinde (29a, 29b) mithilfe eines Metallbalgs (70) verbunden sind.

5. Linearstellglied nach Anspruch 1 bis 4, umfassend eine solide Vorspannvorrichtung (36), welche in der Lage ist, eine Spannung zwischen den miteinander in Kontakt gebrachten äußeren Ringen (32a, 32b) auszuüben.

6. Linearstellglied nach Anspruch 5, dessen Vorspannvorrichtung (36) eine Stützfläche (34) und einen elastischen Ring (35) umfasst, welcher die beiden miteinander in Kontakt stehenden äußeren Ringe (32a, 32b) eng umschließt, und eine Spannschraubengruppe (36) umfasst, welche konfiguriert ist, um eine Spannung auf den elastischen Ring (35) aufzuerlegen.

7. Linearstellglied nach Anspruch 1 bis 4, umfassend eine elastische Vorspannvorrichtung (52), welche in der Lage ist, eine Spannung zwischen den beiden voneinander entfernten äußeren Ringen (51a, 51b) auszuüben.

8. Linearstellglied nach Anspruch 7, dessen Gestell eine erste und eine zweite Halbschale (50a, 50b) umfasst, welche jeweils fest mit dem ersten und dem zweiten äußeren Ring (51a, 51b) verbunden sind, und dessen Vorspannvorrichtung (52) konfiguriert ist, um eine Spannung aufzuerlegen, welche dazu tendiert, die beiden äußeren Ringe (51a, 51b) einander anzunähern; wobei die drehbare Führung durch die beiden X-förmig montierten Kugellager (33a, 33b) sichergestellt wird.

9. Linearstellglied nach Anspruch 7, dessen Gestell eine erste und eine zweite Halbschale (50c, 50d) umfasst, welche jeweils fest mit dem ersten und dem zweiten äußeren Ring (51c, 51d) verbunden sind, und dessen Vorspannvorrichtung (62) konfiguriert ist, um eine Spannung aufzuerlegen, welche dazu tendiert, die beiden äußeren Ringe (51c, 51d) voneinander zu entfernen; wobei die drehbare Führung durch die beiden O-förmig montierten Kugellager (33c, 33d) sichergestellt wird.

10. Linearstellglied nach einem der vorhergehenden Ansprüche, wobei die Schnecke (25) und das Gestell (26) drehbar miteinander verbunden und in Translationsrichtung frei beweglich sind.

11. Linearstellglied nach Anspruch 10, wobei die Schnecke (25) und das Gestell (26) mithilfe einer Passfeder oder eines Metallbalgs (27) verbunden sind.

12. Linearstellglied nach einem der vorhergehenden Ansprüche, umfassend einen Drehmotor (31), welcher in der Lage ist, die Ringe mit Innengewinde (29a, 29b) des Gewinderollenmechanismus (24) in Bezug auf das Gestell (26) drehbar anzutreiben.

13. Linearstellglied nach einem der vorhergehenden Ansprüche, wobei die Rollen (28) kreisförmige Nuten in Kontakt mit der Schnecke (25) und mit den Ringen mit Innengewinde (29a, 29b) umfassen.

## Claims

1. A linear actuator comprising a roller screw mechanism (24) guided in rotation with respect to a structure (26) by means of a first and a second angular-contact ball bearing (33a, 33b); the roller screw mechanism (24) comprising rollers (28) interposed between an endless screw (25) and a first and a second threaded ring (29a, 29b) which are joined together in rotation and free in translation,
**characterized in that** the first and second threaded rings (29a, 29b) are secured to a respective inner ring of the first and of the second angular-contact ball bearings (33a, 33b),
and **in that** the linear actuator comprises a single preloading device (36, 52) capable of applying a load between two outer rings (32a, 32b) of the first and of the second angular-contact ball bearings (33a, 33b) respectively, simultaneously allowing the loading of the roller screw mechanism (24) and the rotational guidance of the roller screw mechanism (24) with respect to the structure (26).

2. The linear actuator according to claim 1, wherein the threaded rings (29a, 29b) constitute the inner rings of the two ball bearings (33a, 33b).

3. The linear actuator according to claim 2, wherein the threaded rings (29a, 29b) are connected by means of a key (30).

4. The linear actuator according to claim 2, wherein the threaded rings (29a, 29b) are connected by means of a metal bellows (70).

5. The linear actuator according to claim 1 to 4, comprising a solid preloading device (36) capable of applying a load between the outer rings (32a, 32b) brought into contact with one another.

6. The linear actuator according to claim 5, of which the preloading device (36) comprises a bearing surface (34) and an elastic ring (35) clasping the two outer rings (32a, 32b) in contact with one another and comprising a set of clamping screws (36) which is configured to impose a load to the elastic ring (35).

7. The linear actuator according to claim 1 to 4, comprising an elastic preloading device (52) capable of applying a load between the two outer rings (51a, 51b) distant from one another.

8. The linear actuator according to claim 7, of which the structure comprises a first and a second half-shell (50a, 50b) which are secured respectively to the first and second outer rings (51a, 51b), and of which the preloading device (52) is configured to impose a load that tends to bring the two outer rings (51a, 51b) closer together, rotational guidance being provided by the two ball bearings (33a, 33b) mounted in the "X" configuration.

9. The linear actuator according to claim 7, of which the structure comprises a first and a second half-shell (50c, 50d) which are secured respectively to the first and second outer rings (51c, 51d), and of which the preloading device (62) is configured to impose a load that tends to move the two outer rings (51c, 51d) apart, rotational guidance being provided by the two ball bearings (33c, 33d) mounted in the "O" configuration.

10. The linear actuator according to one of the preceding claims, wherein the endless screw (25) and the structure (26) are connected in rotation and free in translation.

11. The linear actuator according to claim 10, wherein the endless screw (25) and the structure (26) are connected by means of a key or of a metal bellows (27).

12. The linear actuator according to one of the preceding claims, comprising a rotary motor (31) capable of driving the rotation of the threaded rings (29a, 29b) of the roller screw mechanism (24) with respect to the structure (26).

13. Linear actuator according to one of the preceding claims, wherein the rollers (28) comprise circular grooves in contact with the endless screw (25) and with the threaded rings (29a, 29b).
